# FASCICULE DE BREVET EUROPEEN

(11) **EP 1 941 175 B1**
(45) Date de publication et mention de la délivrance du brevet: **04.01.2017**
(21) Numéro de dépôt: 06806026.8
(22) Date de dépôt: 04.10.2006
(51) Int. Cl.: F16D 65/18

(54) **PROCEDE DE REGLAGE D'UN FREIN DE STATIONNEMENT AUTOMATIQUE**
VERFAHREN ZUR REGELUNG EINER AUTOMATISCHEN FESTSTELLBREMSE
METHOD OF ADJUSTING AN AUTOMATIC PARKING BRAKE

(30) Priorité: 05.10.2005 FR 0510155
(43) Date de publication de la demande: 09.07.2008
(73) Titulaire: ROBERT BOSCH GMBH, 70442 Stuttgart (DE)
(72) Inventeur: TRISTANO, Nicola, I-75100 Matera (IT); CARUSO, Corrado, I-70121 Bari (IT); SCHEFZIK, Monika, I-70050 Santo Spirito (Bari) (IT)
(86) Numéro de dépôt international: PCT/EP2006/009587
(87) Numéro de publication internationale: WO 2007/039283

(56) Documents cités:
- EP-A- 0 866 236
- EP-A- 1 498 633
- WO-A-2004/065814
- WO-A-2005/070736
- US-A- 3 983 975
- PATENT ABSTRACTS OF JAPAN vol. 2000, no. 13, 5 février 2001 (2001-02-05) & JP 2000 297833 A (AKEBONO BRAKE IND CO LTD), 24 octobre 2000 (2000-10-24)

## Description

L'invention concerne un procédé de compensation du refroidissement d'un frein de stationnement automatique et un système mettant en oeuvre ce procédé.

Il est courant que, dans un véhicule équipé d'un système de freinage de stationnement automatique, celui-ci soit mis en fonctionnement alors que les organes de freinage sont chauds voire même à température relativement élevée. Ces organes sont donc dans un état dilaté lorsque le système de freinage de stationnement automatique est mis en fonctionnement.

Dans un véhicule où le frein de stationnement agit sur un système de frein à disque, c'est le disque et les garnitures de freins qui sont chauds. Après fonctionnement du frein de stationnement automatique, durant l'arrêt du véhicule, le disque et les garnitures de freins refroidissent et diminuent de volumes. La force de freinage diminue en raison du rétrécissement des garnitures et du disque.

Ceci peut induire un desserrage du frein et éventuellement une libération du véhicule. Dans certains systèmes, il est prévu que la force de freinage appliquée par le frein de stationnement automatique tienne compte de ce refroidissement et applique, lorsque le dispositif de freinage est chaud, une force de freinage supérieure à celle nécessaire pour immobiliser le véhicule. Dans certains systèmes, il est également prévu de réaliser une nouvelle application du freinage après le refroidissement du disque et des garnitures de frein.

Dans les véhicules où le frein de stationnement automatique agit sur un frein à tambour, un échauffement à pour effet de dilater le tambour. Lorsque celui-ci refroidit, son volume diminue et le diamètre intérieur de la surface de freinage diminue. Après le fonctionnement d'un frein de stationnement automatique, et refroidissement du frein à tambour, cette diminution de diamètre a pour effet d'augmenter le freinage. La situation est donc inversée par rapport aux systèmes dans lesquels le frein de stationnement automatique agit sur un frein à disque, puisque la force de freinage augmente pendant le refroidissement du tambour.

Les circuits de freinage de stationnement automatique comportent habituellement au moins une fonction indirecte de mesure de force de freinage, par exemple par la mesure du courant d'alimentation du moteur électrique de commande du système de freinage de stationnement. En absence de capteur de force direct permettant de mesurer la force de freinage appliquée, celle-ci doit être estimée au moyen d'une fonction indirecte de mesure de force (mesure du courant d'alimentation du moteur électrique).

Cependant, cette mesure dépend de plusieurs paramètres (par exemple la température, le frottement, l'influence de la vitesse). La force de freinage ne peut donc faire l'objet que d'une estimation approximative.

C'est pourquoi, puisqu'un freinage minimal du véhicule doit être garanti quelles que soient les conditions de freinage et les conditions de stationnement, il est admis d'avoir une force de freinage supérieure à ce qui est normalement nécessaire.

Document WO2004/065814 divulgue un procédé de commande d'un frein de stationnement automatique selon le preambule de la revendication 1. L'invention concerne un système permettant d'éviter ce surcroît de force appliqué aux dispositifs de freinage par un frein de stationnement automatique.

L'invention concerne donc un procédé de commande d'un frein de stationnement automatique d'un véhicule selon revendication 1.

Par ailleurs, on pourra prévoir une limitation de la course du dispositif à ressort à une valeur déterminée pour une valeur de la force de commande de blocage déterminée.

Selon une forme de réalisation de l'invention, le frein de stationnement automatique est commandé par un moteur électrique monté sur le frein lui-même et agissant sur le piston de frein ou par un moteur électrique agissant sur un câble du frein de stationnement. L'étape de mesure de la force de freinage est alors réalisée par la mesure du courant d'alimentation dudit moteur électrique.

Par ailleurs, l'invention prévoit une étape d'établissement de la courbe de la force de commande communiquée au dispositif de freinage en fonction de la course du dispositif de commande.

Le procédé de l'invention comporte alors une étape de contrôle des pentes de ladite courbe pour vérifier que les changements de pentes se produisent aux moments où la force appliquée correspond soit à la force de pré charge soit à la force correspondant à la compression maximale du dispositif à ressort.

Ce procédé prévoit en outre avantageusement le calcul et l'enregistrement en mémoire du rapport des valeurs des forces de commande communiquées au dispositif de freinage mesurées lors des changements de pente de ladite courbe.

Il peut alors prévoir, lors des actionnements du frein de stationnement, la mesure des valeurs des forces de commande communiquées au dispositif de freinage lors des changements de pentes de ladite courbe, et la comparaison du rapport de ces valeurs audit rapport enregistré.

L'invention concerne également un système de frein de stationnement automatique selon revendication 8.

Selon une forme de réalisation de l'invention, le dispositif de freinage sur lequel agit ledit frein de stationnement est un frein à disque.

Selon une autre forme de réalisation de l'invention, le dispositif de freinage sur lequel agit ledit frein de stationnement est un frein à tambour.

Dans un système qui comporte au moins un câble pour transmettre les commandes de freinage audit dispositif de freinage, ledit dispositif à ressort est avantageusement inséré sur ledit câble.

Dans cette forme de réalisation, on pourra prévoir que le dispositif à ressort comporte un boîtier cylindrique qui contient un ressort situé selon l'axe du boîtier entre une première extrémité et une deuxième extrémité du boîtier. La première extrémité possède un bouchon à travers lequel passe le câble et la gaine du câble. Le ressort est en appui sur une rondelle mobile axialement et qui s'appuie elle-même sur le bouchon ou sur ladite extrémité de la gaine, le bouchon ou la gaine formant une première butée. La deuxième extrémité du boîtier possède un couvercle mobile axialement pour régler la pré charge du ressort en coopération avec la première butée.

Une forme intéressante de réalisation est de prévoir le couvercle vissé sur la deuxième extrémité du boîtier.

Par ailleurs, on prévoira avantageusement que le boîtier comporte une deuxième butée permettant de limiter le déplacement de la rondelle en mode compression.

Selon une autre forme de réalisation, le dispositif à ressort est inséré dans le piston du frein à disque.

Le dispositif à ressort comporte alors également une première butée permettant de définir la pré charge.

Il comporte également une deuxième butée limitant la course du dispositif à ressort.

Les différents objets et caractéristiques de l'invention apparaîtront plus clairement dans la description qui va suivre et dans les figures annexées qui représentent:
- la figure 1, un exemple de réalisation d'un dispositif à ressort monté le long d'un câble de commande d'un frein de stationnement et permettant d'appliquer au moins une force de pré charge à un système de freinage,
- la figure 2, un dispositif à ressort inséré à l'intérieur d'un piston d'un frein à disques,
- les figures 3a à 3c, le fonctionnement d'un élément à ressort à deux butées dans un système de frein à disque:

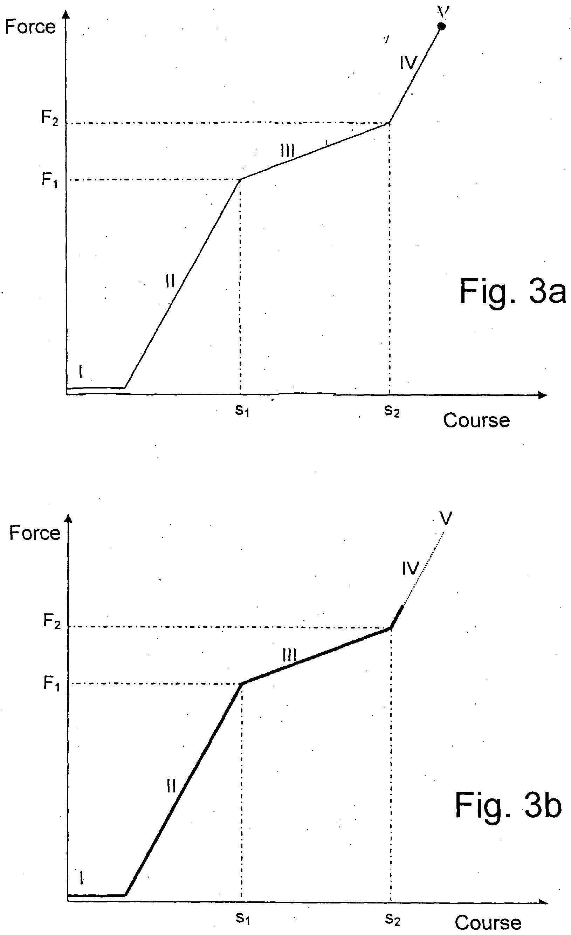

   - la figure 3a illustrant l'intervention du dispositif à ressort,
   - la figure 3b, le comportement durant le cycle de verrouillage,

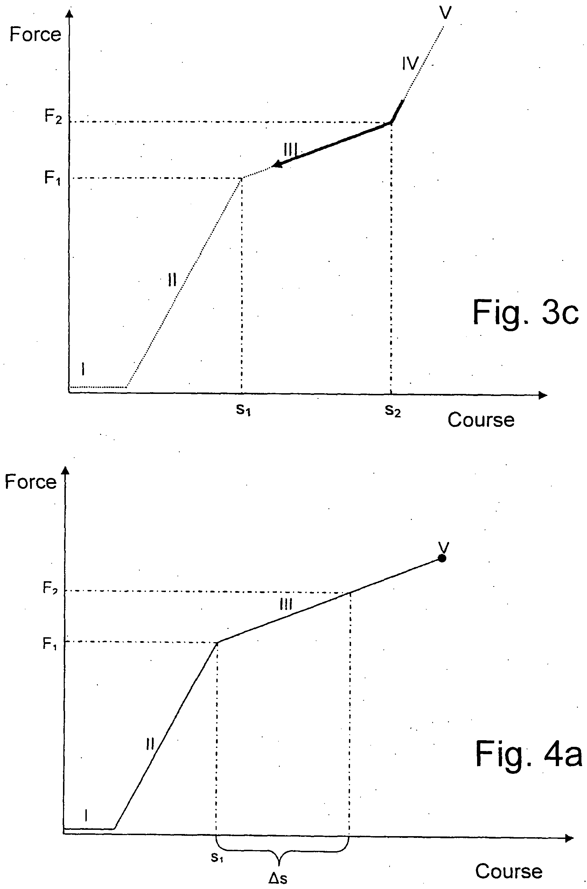

   - et la figure 3c illustrant le comportement durant le refroidissement du système de freinage,
- les figures 4a à 4c, le fonctionnement d'un élément à ressort avec une seule butée dans un système de frein à disque:
   - la figure 4a illustrant l'intervention d'un dispositif à ressort,

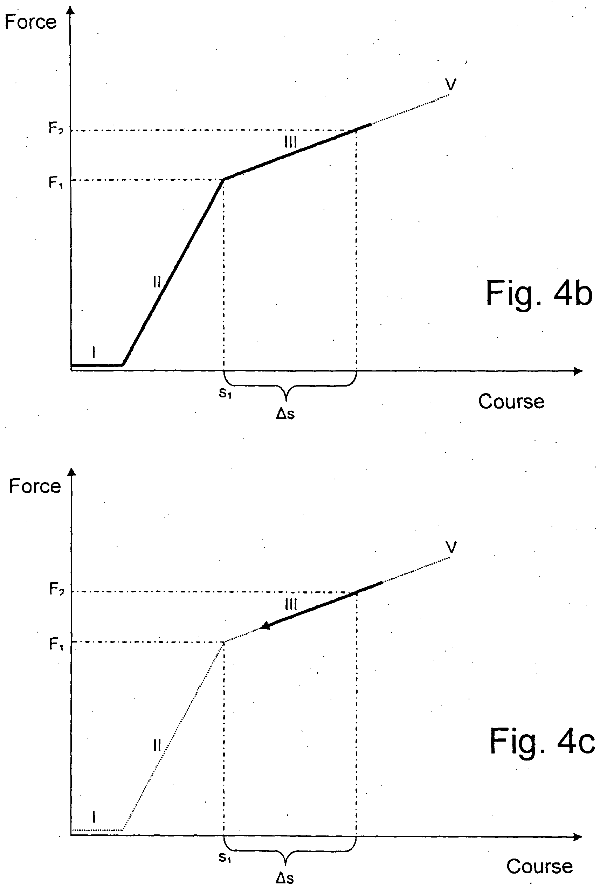

   - la figure 4b, le comportement durant le cycle de verrouillage,
   - et la figure 4c illustrant le comportement durant le refroidissement du système de freinage,

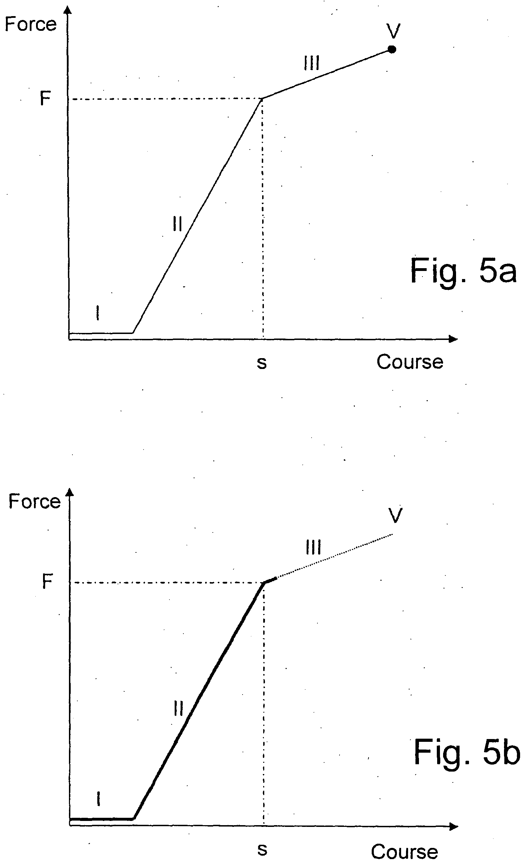

- les figures 5a à 5c, le fonctionnement d'un élément à ressort dans un système de frein à tambour,
   - la figure 5a illustrant l'intervention du dispositif à ressort,
   - la figure 5b, le comportement durant le cycle de verrouillage,

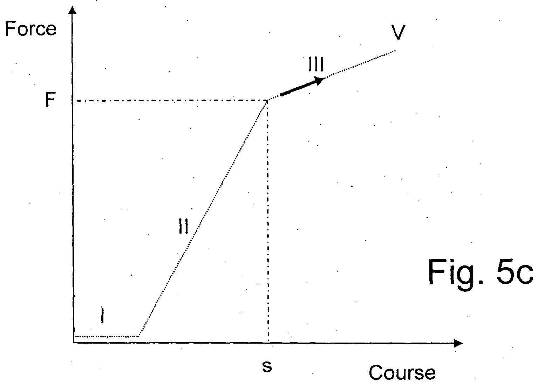

   - et la figure 5c illustrant le comportement durant le refroidissement du système de freinage.

Le but de l'invention est de compenser la relaxation thermique et donc les changements de volumes des composants d'un dispositif de freinage lors de son refroidissement après que le frein de stationnement automatique ait appliqué une force de freinage d'immobilisation au véhicule en stationnement.

Selon le procédé de l'invention, on prévoit donc de n'appliquer qu'une force très faible au dessus de la force minimale d'immobilisation du véhicule de sorte que seul un surcroît de force de freinage faible soit nécessaire pour compenser, dans un frein à disque, la réduction de force de freinage pendant le refroidissement ou pour compenser, dans un frein à tambour, l'augmentation de la force de freinage. La force de freinage minimale exigée peut correspondre à la législation, à des normes ou à des préconisations d'un constructeur automobile.

Par exemple, la force minimale de freinage permet de maintenir immobile le véhicule muni de sa charge maximale autorisée sur une pente à 30%.

En outre, ce dispositif permet l'évaluation précise de la force de freinage appliquée.

L'invention est applicable à un système de freinage de stationnement automatique comportant un dispositif à ressort permettant de stocker l'énergie de freinage du système.

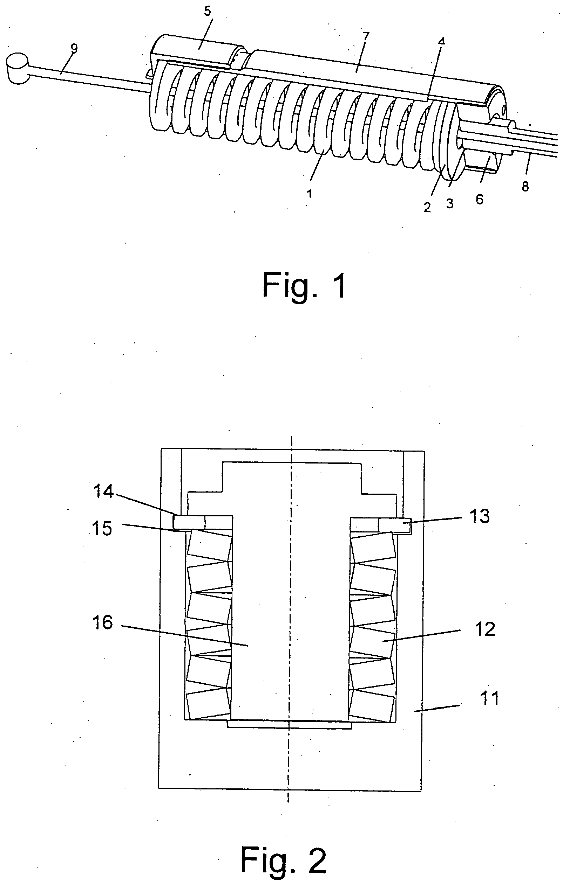

Ceci est réalisé par une rondelle agissant sur un élément ressort et qui peut se déplacer et aller en butée, par exemple comme représenté sur la figure 1 et comme cela sera décrit ultérieurement.

Selon l'invention, on prévoit une mise en charge préalable ou pré charge du dispositif à ressort. Cette pré charge correspond à la force de freinage exigée et est ajustée avec la précision nécessaire.

Sur un véhicule dans lequel le frein de stationnement automatique agit sur des freins à disques, lors du fonctionnement du frein de stationnement pourvu d'un dispositif à ressort ainsi réglé selon l'invention, lorsqu'on atteint la force de freinage minimale exigée (qui correspond donc à la pré charge du dispositif à ressort), le ressort commence seulement à agir dans la chaîne de frein de stationnement. Ce processus a pour conséquence un changement significatif de l'élasticité du système de commande. La force appliquée est augmentée ensuite jusqu'à une compression définie du dispositif de ressort.

Par ailleurs, les systèmes de freinage de stationnement automatiques possèdent un système de mesure indirecte de la force transmise aux dispositifs de freinage. Par exemple, il peut s'agir d'un système de mesure du courant d'alimentation du moteur électrique de commande.

En raison du changement significatif de l'élasticité du système de transmission de la force de commande dû à la pré charge du dispositif à ressort, ce point de fonctionnement est facilement identifiable dans la courbe de la mesure de force.

Comme on le verra lors de la description des figures 3 à 5, cela permettra une mesure précise du niveau de force auquel la compression mentionnée ci-dessus du dispositif de ressort est atteinte.

Pendant la relaxation thermique due au refroidissement du dispositif de freinage, le dispositif à ressort se détend mais maintient la force minimale de freinage exigée en raison de la pré charge préalable à laquelle il a été soumis.

La pré charge du dispositif à ressort et l'élasticité de celui-ci sont stables dans le temps. Cela permet un contrôle du freinage et une estimation relativement précise de la force de freinage dans toutes les conditions de fonctionnement avec une compensation des relaxations thermiques dues au refroidissement sans avoir recours à des capteurs de pression.

L'invention est également applicable à un système dans lequel le frein de stationnement automatique agit sur un frein à tambour. Selon l'invention, on prévoit également un dispositif à ressort pré chargé à la valeur de la force de freinage minimale exigée. Lorsque la force de freinage exigée, qui correspond donc à la pré charge du dispositif à ressort, est atteinte le ressort commence à agir dans la chaîne de frein de stationnement, ce qui a pour conséquence un changement significatif de l'élasticité du système de commande. Ce point de changement est facilement identifiable comme précédemment par une mesure de force voire même par une mesure indirecte telle que la mesure du courant d'alimentation du moteur utilisé par le frein de stationnement. Lorsque ce point de fonctionnement est dépassé le fonctionnement du frein de stationnement peut être bloqué.

Pendant la relaxation thermique et notamment pendant le refroidissement du tambour, le système de commande du frein de stationnement agit dans la zone d'élasticité du dispositif à ressort. Celui-ci va donc se comprimer et limiter l'augmentation de la force de freinage.

Comme précédemment, la mise en pré charge du dispositif à ressort et l'élasticité de celui-ci sont stables dans le temps. Cela permet un contrôle du freinage et une mesure relativement précise de la force de freinage dans toutes les conditions de fonctionnement avec une compensation des relaxations thermiques.

L'évaluation précise de la force de freinage augmente la fiabilité de l'application du frein de stationnement dans toutes les conditions de fonctionnement.

En se reportant aux figures 1 et 2, on va maintenant décrire des exemples de réalisation de dispositifs à ressort utilisables selon l'invention. Les ressorts utilisés peuvent être des ressorts à disques, des ressorts à lames, des ressorts hélicoïdaux, des paquets de ces ressorts ou une combinaison de différents ressorts.

La figure 1 représente un exemple de réalisation d'un dispositif à ressort utilisable dans un frein de stationnement automatique. Il est applicable aussi bien à un frein de stationnement agissant sur un frein à disque qu'à un frein de stationnement agissant sur un frein à tambour.

Ce dispositif comporte un ressort hélicoïdal 1 contenu dans un boîtier cylindrique 7. Une rondelle 2 peut se déplacer axialement entre les deux butées 3 et 4, où la deuxième butée 4 est facultative. La charge pré charge du dispositif à ressort est ajustée par l'intermédiaire du chapeau fileté 5 tandis que la course de la rondelle 2 peut être ajustée à l'aide de l'embout fileté 6.

Le dispositif avec le logement 7 est monté le long du câble de frein de stationnement 9. La gaine 8 contenant le câble 9 traverse l'embout 6 et est en appui sur la rondelle 2.

Le réglage de la pré charge du ressort 1 se fait en réglant la distance entre le chapeau 5 et la rondelle 2 qui est en appui sur la butée 3, c'est-à-dire en vissant plus ou moins le chapeau 5 sur le boîtier 7.

De plus, on peut prévoir de limiter la course de la compression de ressort en limitant la course de la rondelle 2 à l'aide de la butée 4.

Le dispositif est mis en application dans la chaîne de frein de stationnement entre le dispositif produisant la force du frein de stationnement et le dispositif de freinage (garnitures de frein).

Ce dispositif à ressort peut être un seul composant indépendant placé par exemple le long du câble de frein de stationnement, à n'importe emplacement de la gaine contenant ce câble. Alternativement le dispositif de ressort avec ses butées peut être intégré dans un composant de la chaîne, par exemple dans le dispositif de traction du câble.

La figure 1 montre un exemple du dispositif de ressort en tant que composant indépendant.

Dans cet exemple le dispositif possède deux butées 3 et 4. Il est monté le long du câble de frein de stationnement et il agit sur le conduit du câble où la force est égale à la force sur le câble de frein de stationnement

Dans un frein à disque, le dispositif à ressort peut également être inséré dans la chambre de fluide du frein, par exemple dans le piston de frein, mais d'une manière qu'il soit découplé de la chaîne de frein de service. Un exemple de réalisation d'un tel dispositif à ressort est représenté en figure 2. Un tel frein de parking est, par exemple actionné par un câble, par un moteur électrique ou par un actuateur hydraulique.

Le dispositif de ressort 12 est monté directement dans le piston de frein 11. La rondelle 13 se déplace axialement entre les deux butées 14 et 15 où la deuxième butée 15 est facultative. Pendant l'actionnement du frein de stationnement, la force appliquée est communiquée, dans ce mode de réalisation particulier, de la pièce 16 par l'intermédiaire de la rondelle 13 et du ressort 12 au piston de frein 11.

Il est à noter qu'en fonctionnement en frein de service, la pièce 16 et la rondelle 14 ne sont pas en contact et le dispositif à ressort n'influence pas la chaîne de frein de service.

Quelque soit le type de dispositif à ressort, la pré charge appliqué au ressort correspond, selon l'invention à la force de freinage minimale exigée pour maintenir immobile un véhicule en stationnement quelques soient les conditions de freinage du véhicule.

Le procédé de l'invention prévoit donc de pré chargé le ressort à une valeur de charge qui équivaux à la force minimale exercée sur les dispositifs de freinage pour maintenir de façon sûre le véhicule immobile.

Cette force équivalente à la pré charge du dispositif à ressort est référencée par F1 sur les figures 3 et4 et F sur la figure 5. L'élasticité du dispositif à ressort est choisie de sorte que l'augmentation de la compression exercée sur le dispositif à ressort soit réduite au minimum et que l'augmentation de force au-dessus de la force de freinage exigée est également réduite au minimum. La force du dispositif de ressort à la valeur maximum de la compression qui doit être considérée pour la compensation thermique de relaxation dans chaque cas d'application doit être choisie inférieure, dans le pire des cas, à la force produite par le dispositif générateur de force (moteur électrique) du frein de stationnement automatique.

Dans les systèmes de freins de stationnement automatiques agissent sur des freins à disques, le ressort pourra s'étendre pour compenser l'allongement de la course due à la relaxation thermique de la chaîne de freinage et la force de freinage restera, après relaxation thermique, au-dessus de la force de freinage exigée (voir les figures 3c, 4c).

Dans des systèmes de freins de stationnement automatiques agissant sur des freins à tambour, le dispositif de ressort est comprimé pendant la relaxation thermique et limite donc l'augmentation de force (voir la figure 5c).

Les caractéristiques de l'interposition d'un dispositif à ressort dans différentes configurations et différents circuits de freinage seront décrites en détail en se reportant aux figures 3 à 5. Dans différents cas de fonctionnement, ces courbes représentent la force de freinage appliquée en fonction de la course de commande du dispositif de freinage.

Les figures 3a à 3c correspondent à un système de frein de stationnement automatique agissant sur des freins à disques et dans lequel le dispositif à ressort comporte deux butées limitant la course du ressort.

Les figures 4a à 4c correspondent à un système de frein de stationnement automatique agissant sur des freins à disques et dans lequel le dispositif à ressort comporte une seule butée limitant la course du ressort.

Les figures 5a à 5c correspondent à un système de frein de stationnement automatique agissant sur des freins à tambours.

On va donc tout d'abord décrire les figures 3a à 3c.

La figure 3a représente la caractéristique générale de fonctionnement d'un tel dispositif durant le fonctionnement du frein de stationnement automatique.

La courbe de la figure 3a représente donc la caractéristique générale d'un système appliqué à un frein à disque dont la course du dispositif à ressort est limitée par deux butées. Cette courbe peut être divisées en cinq régions différentes référencées I à V.

Ces régions sont de la même manière obtenues à l'aide d'une mesure indirecte de la force appliquée aux dispositifs de freinage, par exemple à l'aide du courant d'alimentation du moteur électrique de commande.

F1 correspond à la pré charge du dispositif à ressort qui a été définie, selon l'invention, comme étant égale à la force de freinage minimale exigée pour obtenir une immobilisation du véhicule.

F2 est le niveau de force à la compression maximum du dispositif à ressort (rondelle à la deuxième butée 4).

La course S1-S2 représente la compression maximum du dispositif à ressort déterminée par la deuxième butée 4. Cette course est déterminée pour chaque cas d'application de sorte que la compression (course) du dispositif à ressort soit suffisante pour compenser la course due à la relaxation thermique de la chaîne. La force de l'élément à ressort à la deuxième butée 4 est donc ajustée avec l'exactitude nécessaire.

Dans la région I la force est très basse puisqu'elle correspond à la course morte du système de freinage qui doit être surmontée.

Dans la région II la force générée par le frein de stationnement est inférieure à la valeur de la pré charge du dispositif à ressort. Le comportement du système de freinage de stationnement est déterminé par l'élasticité des étriers de frein et le dispositif à ressort n'a pas d'influence.

Quand la force appliquée atteint la valeur de la pré charge F1 du dispositif à ressort, celui-ci commence à être comprimé jusqu'à atteindre la région III.

Dans la région III, apparaît un changement apparent de l'élasticité de la chaîne de freinage et on constate de ce fait un changement significatif de la pente de la courbe par rapport à la pente de la région II.

Quand la force appliquée atteint le niveau de compression maximum du dispositif à ressort (aucune autre compression du ressort n'est maintenant possible) le système arrive dans à la région IV.

Dans la région IV le dispositif à ressort n'agit plus et le comportement est déterminé encore seulement par les étriers du frein à disque.

Si la force produite par l'élément de commande du frein de stationnement (moteur électrique par exemple) augmente jusqu'à atteindre sa valeur maximale (par exemple jusqu'à caler le moteur de commande) on arrive au point V où il ne peut plus fournir d'augmentation de force ni de course.

La caractéristique représentée sur la figure 3a permet une commande de force en circuit fermé sans besoin d'un capteur direct de force, puisque les deux points de changement d'élasticité sont clairement identifiables en contrôlant la pente de la fonction indirecte de mesure de force, par exemple la mesure du courant d'alimentation du moteur électrique de commande.

La figure 3b représente la mise en fonctionnement d'un frein de stationnement automatique et la figure 3c représente le fonctionnement pendant la relaxation thermique du dispositif de freinage.

La figure 3b montre le fonctionnement du système selon l'invention à l'aide de la courbe de la force en fonction de la course pendant un cycle d'application du frein de stationnement.

La force est augmentée jusqu'à ce que le deuxième point de changement de pente, après la région III, soit identifiée lors de la mesure indirecte de la force. Dès que ce deuxième point de changement de pente est atteint l'augmentation de force est arrêtée. De cette façon on garantit que la force de freinage restera au-dessus de la valeur de freinage exigée et restera de force égale même après relaxation thermique.

La deuxième butée 4 du dispositif à ressort est déterminée de sorte que la compression correspondante du dispositif à ressort soit suffisante pour compenser la course due à la relaxation thermique.

La figure 3c représente le comportement du système et notamment la course du dispositif de freinage lors du refroidissement. En raison du rétrécissement des garnitures et du disque dû à ce refroidissement, la course et la force de freinage diminuent mais sont limitées par l'expansion du dispositif à ressort de sorte que la force de freinage reste toujours au-dessus de la valeur de freinage exigée F1.

Les valeurs des forces correspondant aux deux butées du dispositif à ressort sont connues très exactement (par exemple pendant le pré réglage). Ces butées peuvent être employées pour calibrer la fonction indirecte de mesure de force pendant chaque application spécifique.

La courbe de fonctionnement ainsi décrite permet également la surveillance des composants de la chaîne de frein de stationnement: le rapport entre les valeurs des forces aux deux points de changement de pentes lors de la mesure indirecte de la force correspond au rapport de la pré charge à la charge finale du dispositif à ressort. Les valeurs mesurées ainsi que leur rapport peuvent être stockés dans une mémoire et être comparés aux rapports prévus. De cette façon les changements possibles du dispositif à ressort peuvent être surveillés.

Les points de changement de pentes sont également reconnaissables pendant l'application de force de freinage et les valeurs de fonctionnement peuvent être stockées. Puisque la différence entre les valeurs de fonctionnement pendant l'application de la force et lors de la libération présente une hystérésis due au ressort et à la transmission de la force (frottement), cette hystérésis peut être surveillée.

D'autres modes de défaillances peuvent être surveillés au moyen de la caractéristique décrite dans les figures 3a à 3c. Notamment, si aucun changement de pente n'est identifié, cela veut dire que le dispositif à ressort n'agit plus en tant que composant élastique ou que la force maximale produite par le dispositif de commande de freinage du moteur (dispositif de traction dans un système à câbles par exemple) est inférieure à la pré charge du dispositif à ressort.

Si un seul point de changement de pente est identifié cela peut vouloir dire que l'élasticité du dispositif à ressort est changée ou que la force produite par le dispositif de commande est une force maximale qui est supérieure à la pré charge mais inférieure à la charge maximale du dispositif à ressort. Si en effet le rapport entre les valeurs fonctionnelles aux points de changements de pentes est changé, cela peut vouloir dire que la pré charge du dispositif à ressort est changée, ou que l'élasticité du dispositif à ressort est changée, ou encore que la charge finale du dispositif à ressort est changée. Si une valeur absolue fonctionnelle est changée sensiblement (relativement aux valeurs stockées) la raison pourrait être soit un changement dans la caractéristique du dispositif produisant la force de freinage, soit un changement de la pré charge du dispositif à ressort ou de l'élasticité du dispositif à ressort.

La figure 4a décrit la caractéristique générale d'un dispositif à ressort équipé de la seule butée 3 pour un système appliqué à un frein à disque, tandis que la figure 4b représente le comportement du fonctionnement d'un frein de stationnement et la figure 4c représente un comportement du système pendant la relaxation thermique.

De façon générale, la description précédente des figures 3a à 3c est valide également pour les figures 4a à 4c.

La figure 4a représente donc une caractéristique générale de la course en fonction de la force pour un système appliqué à un frein à disque et comportant un dispositif à ressort avec une seule butée.

Cette caractéristique peut être divisée en quatre régions différentes référencées I, II, III et V. Ces régions sont de la même manière distinguables dans la fonction de mesure indirecte de la force (par exemple le courant du moteur de commande).

La force F1 correspond à la pré charge du dispositif à ressort qui est également définie comme étant la force de freinage exigée.

La course Δs représente la compression (course) du dispositif à ressort qui est suffisante pour compenser la course due à la relaxation thermique de la chaîne.

F2 est le niveau de force après la compression du dispositif à ressort par la course Δs.

Les régions I à III de la courbe 4a correspondent à celles de la figure 3a et la description précédente de ces régions leur est applicable. En raison de l'absence de butée 4 et donc de limitation de la course du ressort, la région IV n'est pas présente dans cette caractéristique. La région III continue à la place de la région IV jusqu'à ce que le dispositif de commande (moteur électrique de traction dans le cas d'un dispositif à câble) produise sa force maximum, par exemple jusqu'à ce que le moteur cale. Puisque aucune autre augmentation de force ni d'augmentation de course du ressort n'est possible, la région V est atteinte.

Puisque la pré charge du dispositif à ressort est connue très exactement (par exemple lors du préréglage), elle peut être employée pour calibrer la fonction de mesure de force indirecte pendant chaque application spécifique. La pré charge du ressort qui correspond à la valeur fonctionnelle de la fonction indirecte de mesure de force au moment où la pente change de valeur donne un rapport qu'on peut prétendre être constant pour chaque fonctionnement et spécialement dans la gamme élevée des forces.

La figure 4b montre la courbe de la force en fonction du comportement de la course pendant un cycle d'application de frein de stationnement. Au changement de la pente le rapport mentionné ci-dessus est calculé, ce qui permet de.calculer la valeur de la force F2. La force est augmentée jusqu'à ce que le niveau F2 de force soit atteint et dès cet instant, le cycle d'application du frein de stationnement automatique peut être arrêté.

Une commande de force en circuit fermé sans besoin d'une sonde directe de force est ainsi possible. De cette façon on garantit que la force de freinage restera au-dessus de la force de freinage exigée également après une relaxation thermique puisque la pression du dispositif à ressort est choisie de sorte que la force correspondant à la compression du dispositif à ressort soit suffisante pour compenser la course due à la relaxation thermique.

La figure 4c montre le comportement du système pendant la relaxation thermique. En raison du rétrécissement des garnitures et des disques la course et la force de freinage diminue mais est limitée par l'expansion du dispositif à ressort de sorte que la force de freinage reste toujours supérieure à la force de freinage exigée F1.

Si un capteur de déplacement mesurant la course du dispositif de freinage est prévu, un système sans capteur de force est réalisable. Il suffit alors que le système détecte le changement de pente entre les régions II et III et qu'on mesure la course au-delà du point de changement de pente.

La mesure de course ci-dessus ou un capteur de contact permet toutes les possibilités de surveillance, par exemple élasticité de ressort, générateur de force, comme décrit précédemment pour le dispositif avec deux butées.

La caractéristique de la figure 4a permet la surveillance des composants de la chaîne de frein de stationnement. Le point de changement de pente est également identifiable pendant la libération de la force de freinage et des valeurs fonctionnelles peuvent être enregistrées. Une différence peut se présenter entre ces valeurs fonctionnelles lors de l'actionnement du frein de stationnement et lors de son relâchement. Cette différence peut être due à une hystérésis résultant de l'élasticité du dispositif à ressort et de celle du dispositif de freinage. Et cette hystérésis peut être contrôlée.

D'autres modes de défaillance peuvent être surveillés au moyen de la caractéristique de la figure 4a. Si aucun changement de pente n'est identifié on peut en déduire que le dispositif à ressort n'agit plus en tant que composant élastique, ou que le dispositif générateur de la force de freinage génère une force maximum qui est inférieure à la pré charge du dispositif à ressort. Si la valeur absolue de la valeur fonctionnelle est changée sensiblement (par rapport aux valeurs enregistrées) la raison pourrait être un changement de la caractéristique du générateur de force de freinage ou de la pré charge du dispositif à ressort.

La figure 5a décrit la caractéristique générale d'un dispositif à ressort avec une butée pour des systèmes de freins à tambour. Les figures 5b et 5c décrivent respectivement le comportement pendant l'actionnement du frein de stationnement et pendant le processus de relaxation thermique.

De façon générale, la description précédente des figures 3a à 3c et 4a à 4c est applicable aux figures 5a à 5c.

La figure 4a représente une caractéristique général de la course en fonction de la force pour un système appliqué à un frein à tambour et comportant un dispositif à ressort avec une seule butée.

Cette caractéristique peut être divisée en quatre régions différentes référencées I, II, III et V. Ces régions sont de la même manière distinguables par la fonction de mesure indirecte de la force (par exemple par la mesure du courant du moteur de commande).

Ces régions sont de la même manière distinguables par la fonction indirecte de mesure de force, par exemple le courant d'alimentation du moteur commande. F1 correspond à la pré charge du dispositif à ressort qui est égale à la force de freinage exigée pour chaque application.

Les régions I à III sont identiques à celles de la figure 3a et la description ci-dessus de ces régions est également valide dans ce mode d'application à un frein à tambour.

En raison de l'absence de la limitation de la course du dispositif à ressort relativement à la disposition de la figure 3a, la région IV n'est pas présente dans cette caractéristique. La région III continue jusqu'à ce que le moteur fournisse sa force maximum, par exemple. Dans ce cas, aucune autre augmentation de force ni augmentation de course du ressort n'est possible lorsque la région V est atteinte.

La figure 5b montre les courbes de la force en fonction de la course pendant un cycle d'application du frein de stationnement. Dès que le changement de la pente au niveau de la force F est atteint le cycle d'application peut être arrêté. Une commande autonome de la force sans utilisation d'un capteur directe de force est donc possible. De cette façon, on garantit que la force de freinage est atteinte.

La figure 5c montre le comportement de la force en fonction de la course pendant la relaxation thermique. En raison du rétrécissement du diamètre du tambour la force de freinage est augmentée mais limitée par la compression du dispositif à ressort de sorte que la force de freinage reste toujours inférieure à la valeur maximale de force qui est déterminée par la compression maximale du dispositif à ressort due à la relaxation thermique.

Puisque la pré charge du dispositif à ressort est connue avec exactitude (par exemple lors de la procédure de préréglage du dispositif à ressort) il peut être possible de calibrer la fonction de mesure indirecte de la force de commande de freinage pour chaque type d'application.

La caractéristique de la figure 5 permet le contrôle des composants de la chaîne de frein de stationnement. En effet, le point de changement de la pente est identifiable aussi bien lors de l'actionnement du frein de stationnement que lors de la libération. Les différences liées à l'hystérésis du système peuvent apparaître entre l'actionnement et la libération du frein de stationnement. Cette hystérésis peut être contrôlées

Comme précédemment, différents modes de défaillances peuvent être surveillés au moyen de la caractéristique décrite dans la figure 5a.

Si aucun changement de pente n'est identifié, cela peut signifier que le dispositif à ressort n'agit plus en tant que composant élastique, ou que le dispositif générateur de la force de freinage (moteur) génère une force maximum qui est inférieure à la pré charge du dispositif à ressort. Si la valeur absolue de la valeur fonctionnelle est changée sensiblement (par rapport aux valeurs enregistrées) la raison pourrait être un changement de la caractéristique du générateur de force de freinage ou de la pré charge du dispositif à ressort.

La caractéristique de la figure 4a permet la surveillance des composants de la chaîne de frein de stationnement. Le point de changement de pente est également identifiable pendant la libération de la force de freinage et des valeurs fonctionnelles peuvent être enregistrées. Une différence peut se présenter entre ces valeurs fonctionnelles lors de la mise en fonctionnement du frein de stationnement et lors de son relâchement. Cette différence peut être due à une hystérésis due à l'élasticité du dispositif à ressort et celle du dispositif de freinage. Cette hystérésis peut être contrôlée.

D'autres modes de défaillances peuvent être surveillés au moyen de la caractéristique représentée par la figure 4a.

Par ailleurs, en utilisant des sondes additionnelles, d'autres modes de défaillances peuvent être surveillés. Avec par exemple une sonde de course, l'élasticité du dispositif à ressort peut être surveillée.

La surveillance décrite précédemment de la fonction indirecte de mesure de force permet une commande en circuit fermé de force sans besoin d'un capteur direct de force.

Puisque l'élasticité du dispositif à ressort est stable dans le temps, le niveau de force atteint est indépendant de la variation des paramètres de la fonction indirecte de mesure de force.

La force de freinage est estimée avec une précision élevée et reproductible dans toutes les conditions.

Un logiciel peut être prévu pour réaliser les contrôles ci-dessus et détecter une manoeuvre du frein de stationnement en l'absence de commande du conducteur de sorte que l'émission d'une alarme est possible en cas de défaut de fonctionnement.

Les changements de pente de la mesure indirecte de force fonctionnent pendant l'application ou pendant la libération du frein de stationnement sont détectables avec n'importe quelle valeur de pression hydraulique appliquée dans la chaîne de frein de service.

Des sondes additionnelles peuvent être employées pour fournir des informations additionnelles par exemple sur la force ou la course et pour avoir davantage de surveillance des composants et/ou de la commande en circuit fermé.

## Revendications

1. Procédé de commande d'un frein de stationnement automatique d'un véhicule, ledit frein comprenant un dispositif à ressort (1) d'absorption des forces de commande situé dans la chaîne de commande d'un dispositif de freinage, le procédé comporte au moins les étapes suivantes:
-- mise en pré charge dudit dispositif à ressort,
-- réglage de cette pré charge à un niveau correspondant au moins à une force de freinage minimale exigée pour ledit véhicule, **caractérisé en ce qu'**il comporte les étapes suivantes:
-- une étape de mesure indirecte de la force de commande de freinage
-- une étape de blocage du frein de stationnement lorsque ladite force de commande de freinage est supérieure à une force de valeur équivalente à ladite pré charge, et
-- une étape de mesure du déplacement (Δs) du dispositif à ressort,
-- une étape du blocage du fonctionnement du frein de stationnement automatique lorsque ledit déplacement atteint une valeur déterminée.

2. Procédé de réglage selon la revendication 1, **caractérisé en ce qu'**il prévoit une limitation de la course du dispositif à ressort à une valeur déterminée pour une valeur de la force de commande de blocage déterminée.

3. Procédé de réglage selon la revendication 1, **caractérisé en ce que** le frein de stationnement automatique étant commandé par un frein électrique, l'étape de mesure de la force de freinage est réalisée par la mesure du courant d'alimentation dudit moteur électrique.

4. Procédé de réglage selon la revendication 1, **caractérisé en ce qu'**il comporte une étape d'établissement de la courbe de la force de commande communiquée au dispositif de freinage en fonction de la course du dispositif de commande.

5. Procédé de réglage selon la revendication 4, **caractérisé en ce qu'**il comporte une étape de contrôle des pentes de ladite courbe pour vérifier que les changements de pentes se produisent aux moments où la force appliquée correspond soit à la force de pré charge soit à la force correspondant à la compression maximale du dispositif à ressort.

6. Procédé de commande selon la revendication 4, **caractérisé en ce qu'**il prévoit le calcul et l'enregistrement en mémoire du rapport des valeurs des forces de commande communiquées au dispositif de freinage mesurées lors des changements de pente de ladite courbe.

7. Procédé de commande selon la revendication 6, **caractérisé en ce qu'**il prévoit, lors des actionnements du frein de stationnement, la mesure des valeurs des forces de commande communiquées au dispositif de freinage lors des changements de pentes de ladite courbe, et la comparaison du rapport de ces valeurs audit rapport enregistré.

8. Système de frein de stationnement automatique comprenant au moins un dispositif de freinage, un dispositif à ressort (1) étant inséré dans la chaîne de commande dudit dispositif de freinage, **caractérisé en ce qu'**il comporte un capteur de déplacement mesurant la course du dispositif de freinage, et le dispositif à ressort étant pré chargé à une valeur de force correspondant à la force de freinage minimale exigée (F1, F), et appliquant le procédé selon l'une quelconque des revendications précédents

9. Système selon la revendication 8, **caractérisé en ce qu'**il comporte au moins un câble (9) pour transmettre les commandes de freinage audit dispositif de freinage, ledit dispositif à ressort étant inséré sur ledit câble (9).

10. Système selon les revendications 8 ou 9, caractérisé en qu'il comporte un boîtier cylindrique (7) contenant un ressort (1) situé selon l'axe du boîtier entre une première extrémité et une deuxième extrémité du boîtier, la première extrémité possédant un bouchon (6) à travers lequel passe le câble et une extrémité de la gaine du câble, le ressort (1) étant en appui sur une rondelle (3) mobile axialement et s ' appuyant elle-même sur le bouchon (6) ou sur ladite extrémité de gaine (8), le bouchon ou la gaine formant une première butée, la deuxième extrémité du boîtier possédant un couvercle (5) mobile axialement pour régler la pré charge du ressort (1) en coopération avec la première butée (3).

11. Système selon la revendication 10, caractérisé en ce le couvercle (5) est vissé sur la deuxième extrémité du boîtier.

12. Système selon la revendication 10, **caractérisé en ce que** le boîtier comporte une deuxième butée (4) permettant de limiter le déplacement de la rondelle (3) en mode compression.

13. Système selon la revendication 10, **caractérisé en ce que** le dispositif à ressort est inséré dans le piston du frein à disque.

14. Système selon la revendication 13, **caractérisé en ce que** le dispositif à ressort comporte une première butée (14) permettant de définir la pré charge.

15. Système selon la revendication 14 **caractérisé en ce que** le dispositif à ressort comporte une deuxième butée (15) limitant la course du dispositif à ressort.

## Patentansprüche

1. Verfahren zur Steuerung einer automatischen Feststellbremse eines Fahrzeugs, wobei die Bremse eine Federvorrichtung (1) zur Absorption der Steuerkräfte enthält, die sich in der Steuerkette einer Bremsvorrichtung befindet, wobei das Verfahren mindestens die folgenden Schritte aufweist:
- Vorspannen der Federvorrichtung,
- Einstellen dieser Vorspannung auf einen Pegel, der mindestens einer für das Fahrzeug erforderlichen minimalen Bremskraft entspricht, **dadurch gekennzeichnet, dass** es die folgenden Schritte aufweist:
- einen Schritt des indirekten Messens der Bremssteuerkraft,
- einen Schritt des Blockierens der Feststellbremse, wenn die Bremssteuerkraft höher ist als eine Kraft eines Werts gleich der Vorspannung, und
- einen Schritt des Messens der Verschiebung (Δs) der Federvorrichtung,
- einen Schritt des Blockierens des Betriebs der automatischen Feststellbremse, wenn die Verschiebung einen bestimmten Wert erreicht.

2. Einstellverfahren nach Anspruch 1, **dadurch gekennzeichnet, dass** es eine Begrenzung des Hubs der Federvorrichtung auf einen bestimmten Wert für einen Wert der bestimmten Blockiersteuerkraft vorsieht.

3. Einstellverfahren nach Anspruch 1, **dadurch gekennzeichnet, dass**, da die automatische Feststellbremse von einer elektrischen Bremse gesteuert wird, der Schritt des Messens der Bremskraft durch das Messen des Versorgungsstroms des Elektromotors durchgeführt wird.

4. Einstellverfahren nach Anspruch 1, **dadurch gekennzeichnet, dass** es einen Schritt des Erstellens der Kurve der an die Bremsvorrichtung übermittelten Steuerkraft abhängig vom Hub der Steuervorrichtung aufweist.

5. Einstellverfahren nach Anspruch 4, **dadurch gekennzeichnet, dass** es einen Schritt des Überwachens der Steigungen der Kurve aufweist, um zu überprüfen, dass die Steigungsänderungen zu den Zeitpunkten erfolgen, zu denen die angewendete Kraft entweder der Vorspannungskraft oder der Kraft entspricht, die der maximalen Komprimierung der Federvorrichtung entspricht.

6. Steuerverfahren nach Anspruch 4, **dadurch gekennzeichnet, dass** es das Berechnen und Speichern des Verhältnisses der an die Bremsvorrichtung übermittelten Steuerkräfte vorsieht, die bei Steigungsänderungen der Kurve gemessen werden.

7. Steuerverfahren nach Anspruch 6, **dadurch gekennzeichnet, dass** es bei Betätigungen der Feststellbremse das Messen der Werte der an die Bremsvorrichtung übermittelten Steuerkräfte bei den Steigungsänderungen der Kurve und den Vergleich des Verhältnisses dieser Werte mit dem gespeicherten Verhältnis vorsieht.

8. Automatisches Feststellbremssystem, das mindestens eine Bremsvorrichtung enthält, wobei eine Federvorrichtung (1) in die Steuerkette der Bremsvorrichtung eingefügt ist, **dadurch gekennzeichnet, dass** es einen Verschiebungssensor aufweist, der den Hub der Bremsvorrichtung misst, und die Federvorrichtung mit einem Kraftwert vorgespannt wird, der der geforderten minimalen Bremskraft (F1, F) entspricht, und das Verfahren nach einem der vorhergehenden Ansprüche anwendet.

9. System nach Anspruch 8, **dadurch gekennzeichnet, dass** es mindestens ein Kabel (9) aufweist, um die Bremssteuerungen an die Bremsvorrichtung zu übertragen, wobei die Federvorrichtung auf das Kabel (9) aufgebracht ist.

10. System nach den Ansprüchen 8 oder 9, **dadurch gekennzeichnet, dass** es ein zylindrisches Gehäuse (7) aufweist, das eine Feder (1) enthält, die sich gemäß der Achse des Gehäuses zwischen einem ersten Ende und einem zweiten Ende des Gehäuses befindet, wobei das erste Ende einen Stopfen (6) besitzt, durch den das Kabel und ein Ende der Hülle des Kabels hindurchgehen, wobei die Feder (1) auf einer axial beweglichen Unterlegscheibe (3) aufliegt, die sich selbst auf den Stopfen (6) oder auf das Hüllenende (8) auflegt, wobei der Stopfen oder die Hülle einen ersten Anschlag bildet, wobei das zweite Ende des Gehäuses einen axial beweglichen Deckel (5) besitzt, um die Vorspannung der Feder (1) in Zusammenwirkung mit dem ersten Anschlag (3) zu regeln.

11. System nach Anspruch 10, **dadurch gekennzeichnet, dass** der Deckel (5) auf das zweite Ende des Gehäuses geschraubt ist.

12. System nach Anspruch 10, **dadurch gekennzeichnet, dass** das Gehäuse einen zweiten Anschlag (4) aufweist, der es ermöglicht, die Verschiebung der Unterlegscheibe (3) im Komprimierungsmodus zu begrenzen.

13. System nach Anspruch 10, **dadurch gekennzeichnet, dass** die Federvorrichtung in den Kolben der Scheibenbremse eingefügt ist.

14. System nach Anspruch 13, **dadurch gekennzeichnet, dass** die Federvorrichtung einen ersten Anschlag (14) aufweist, der es ermöglicht, die Vorspannung zu definieren.

15. System nach Anspruch 14, **dadurch gekennzeichnet, dass** die Federvorrichtung einen zweiten Anschlag (15) aufweist, der den Hub der Federvorrichtung begrenzt.

## Claims

1. Method for controlling a vehicle automatic parking brake, the said brake comprising a spring-loaded device with a spring (1) for absorbing the control forces which is situated in the chain of control of a braking device, the method comprising at least the following steps:
- pre-loading the said spring-loaded device,
- adjusting this preload to a level corresponding at least to a minimum braking force required for the said vehicle, **characterized in that** it comprises the following steps:
- a step of indirectly measuring the braking control force
- a step of blocking the parking brake when the said braking control force is greater than a force of equivalent value to the said preload, and
- a step of measuring the displacement (Δs) of the spring-loaded device,
- a step of blocking the operation of the automatic parking brake when the said displacement reaches a determined value.

2. Method of adjustment according to Claim 1, **characterized in that** it anticipates limiting the travel of the spring-loaded device to a determined value for a determined value of the blocking control force.

3. Method of adjustment according to Claim 1, **characterized in that** with the automatic parking brake being controlled by an electric brake, the step of measuring the braking force is performed by measuring the supply current supplied to the said electric motor.

4. Method of adjustment according to Claim 1, **characterized in that** it comprises a step of establishing the curve of the control force imparted to the braking device as a function of the travel of the control device.

5. Method of adjustment according to Claim 4, **characterized in that** it comprises a step of monitoring the gradients of the said curve in order to check that the changes in gradient occur at the moments at which the applied force corresponds either to the preload force or the force corresponding to the maximum compression of the spring-loaded device.

6. Control method according to Claim 4, **characterized in that** it anticipates calculating and recording in memory the ratio of the values of the control forces imparted to the braking device as measured during the changes in gradient of the said curve.

7. Control method according to Claim 6, **characterized in that** it anticipates, during actuations of the parking brake, measuring the values of the control forces imparted to the braking device upon the changes in gradient of the said curve, and comparing the ratio of these values to the said recorded ratio.

8. Automatic parking brake system comprising at least one braking device, a spring-loaded device with a spring (1) being inserted into the chain of command of the said braking device, **characterized in that** it comprises a displacement sensor that measures the travel of the braking device, and the spring-loaded device being pre-loaded to a force value corresponding to the minimum braking force (F1, F) required, and applying the method according to any one of the preceding claims.

9. System according to Claim 8, **characterized in that** it comprises at least one cable (9) for transmitting the braking controls to the said braking device, the said spring-loaded device being inserted on the said cable (9).

10. System according to Claims 8 or 9, **characterized in that** it comprises a cylindrical casing (7) containing a spring (1) situated along the axis of the casing between a first end and a second end of the casing, the first end having a plug (6) through which the cable and one end of the cable sheath pass, the spring (1) bearing against a washer (3) that is axially mobile and itself presses against the plug (6) or against the said end of the sheath (8), the plug or the sheath forming a first end stop, the second end of the casing having a cap (5) that is axially mobile in order to adjust the preload of the spring (1) in collaboration with the first end stop (3).

11. System according to Claim 10, **characterized in that** the cap (5) is screwed onto the second end of the casing.

12. System according to Claim 10, **characterized in that** the casing comprises a second end stop (4) allowing the displacement of the washer (3) in compression mode to be limited.

13. System according to Claim 10, **characterized in that** the spring-loaded device is inserted into the piston of the disk brake.

14. System according to Claim 13, **characterized in that** the spring-loaded device comprises a first end stop (14) allowing the preload to be defined.

15. System according to Claim 14, **characterized in that** the spring-loaded device comprises a second end stop (15) limiting the travel of the spring-loaded device.
